# EUROPEAN PATENT APPLICATION

(11) **EP 2 003 372 A1**
(43) Date of publication of application: **17.12.2008**
(21) Application number: 08010457.3
(22) Date of filing: 09.06.2008
(51) Int. Cl.: F16H 61/20

(54) **Control device and method for automatic transmission**

(30) Priority: 15.06.2007 JP 2007158738
(71) Applicant: JATCO Ltd, Fuji-shi, Shizuoka 417-8585 (JP)
(72) Inventor: Ohtake, Isamu, Fuji-shi Shizuoka 417-8585 (JP); Akebono, Hiromichi, Fuji-shi Shizuoka 417-8585 (JP)
(74) Representative: Hager, Thomas Johannes

(57) **Abstract**

A brake pressure predetermined value (Pa) required to bring a vehicle to a standstill is calculated on the basis of an engine rotation speed (Ne), and when the position of a shift lever (7) is in a driving range and a brake pressure (P) is equal to or greater than the brake pressure predetermined value (Pa) while the vehicle is stationary, neutral control is performed to disengage a forward-reverse switching clutch (4) provided between an engine (1) and a continuously variable transmission (5).

## Description

### FIELD OF THE INVENTION

This invention relates to a control device and method for an automatic transmission.

### BACKGROUND OF THE INVENTION

Neutral control, in which the drive load of an engine is reduced and an improvement in fuel economy is achieved by disengaging a start-up clutch when an automatic transmission is in a driving range and a vehicle is stationary, thereby realizing a neutral state, is known in the

### prior art.

In a control device that performs the neutral control described above, as disclosed in JP2001-165299A, for example, neutral control begins when conditions such as a vehicle speed of 0km/h a throttle opening of 0%, and a foot brake depression amount of a predetermined value or more are met, and the neutral control is terminated when the vehicle speed reaches or exceeds a predetermined vehicle speed, an accelerator pedal depression amount reaches or exceeds a predetermined amount (throttle opening > 0%), the foot brake depression amount falls below the predetermined value, or another termination condition is established.

Further, the predetermined value relating to the foot brake depression amount is typically set at a sufficient value for stopping the vehicle against a creep force generated during idling of the engine.

### SUMMARY OF THE INVENTION

An idling rotation speed of the engine increases beyond a normal idling rotation speed when the engine temperature is low or the air-conditioning is operational, for example. Hence, the predetermined value relating to the foot brake depression amount must be set in accordance with a maximum rotation speed of the idling rotation speed of the engine when the engine temperature is low, the air-conditioning is operational, and so on, for example, and is therefore set at a value that can resist a comparatively large creep force.

However, when the predetermined value relating to the foot brake depression amount is set in accordance with the maximum rotation speed of the idling rotation speed of the engine when the engine temperature is low, the air-conditioning is operational, and so on, for example, neutral control does not begin until the foot brake depression amount reaches the predetermined value, which is set to resist a large creep force, even if the creep force generated at the normal idling rotation speed is small.

Conventionally, therefore, neutral control is not begun even in a state where it is possible to begin neutral control, and as a result, the fuel economy deteriorates.

This invention has been invented to solve the problem described above, and it is an object thereof to achieve an improvement in fuel economy by starting neutral control appropriately in accordance with the operating conditions of a vehicle.

This present invention provides a control device for controlling an automatic transmission to which a rotation of an engine is transmitted. The device comprises means for detecting a position of a shift lever of the automatic transmission; means for detecting a depression amount of a foot brake; means for detecting an engine rotation speed, means for calculating a foot brake depression amount predetermined value required to bring a vehicle to a standstill while the vehicle is stationary, on the basis of the engine rotation speed, and means for disengaging a clutch provided between the engine and the automatic transmission when the position of the shift lever is in a driving range and the foot brake depression amount is equal to or greater than the foot brake depression amount predetermined value while the vehicle is stationary.

According to this invention, the foot brake depression amount predetermined value required to bring the vehicle to a standstill is calculated on the basis of the engine rotation speed, and when the shift lever is in the driving range and the foot brake depression amount while the vehicle is stationary is equal to or greater than the foot brake depression amount predetermined value, neutral control is performed by disengaging the clutch. Thus, a determination as to whether or not neutral control should be performed can be made accurately in accordance with the idling rotation of the engine, and as a result, an improvement in fuel economy can be achieved.

The details as well as other features and advantages of this invention are set forth in the remainder of the specification and are shown in the accompanying drawings.

### BRIEF DESCRIPTION OF THE DRAWINGS

FIG. 1 is a schematic constitutional diagram of an embodiment of this invention.

FIG. 2 is a flowchart used to perform neutral control according to an embodiment of this invention.

FIG. 3 is a map showing a relationship between an engine rotation speed and a brake pressure predetermined value.

### DETAILED DESCRIPTION OF THE PREFERRED EMBODIMENT

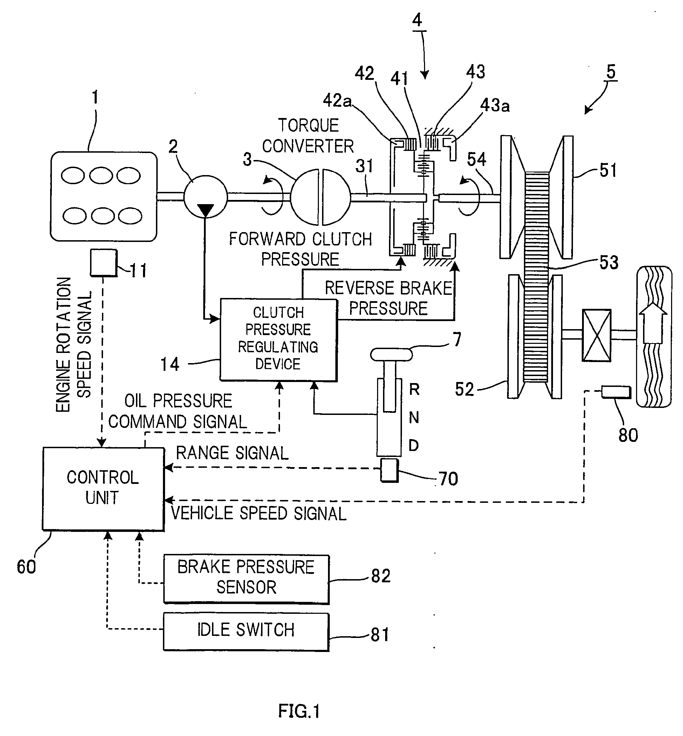

A power train according to an embodiment of this invention will now be described using the schematic diagram of FIG. 1.

The power train according to an embodiment of this invention comprises an engine 1, a hydraulic pump 2, a torque converter 3, a forward-reverse switching clutch (clutch) 4, and a continuously variable transmission (automatic transmission) 5.

The engine 1 is an internal combustion engine that burns gasoline or the like to generate output that drives a vehicle, for example.

The torque converter 3 comprises a lockup mechanism (not shown) that mechanically engages input/output shafts of the torque converter 3. The torque converter 3 enables the vehicle to start when the lockup mechanism is disengaged, and also damps vibration. The lockup mechanism also engages the input/output shafts of the torque converter 3 when a vehicle speed (V) is in a medium/high speed region, and by adjusting the resulting engagement force, the output of the engine 1 is transmitted partially or wholly to the forward-reverse switching clutch 4.

The forward-reverse switching clutch 4 comprises a planetary gear 41 that switches a power transmission path between the engine 1 side and the side of the continuously variable transmission 5, to be described below, a forward clutch 42, and a reverse brake 43. The forward clutch 42 is connected to a forward clutch piston, and is engaged by oil pressure (forward clutch pressure) supplied to a forward clutch piston chamber 42a when the vehicle advances. When the forward clutch 42 is engaged, a turbine shaft 31 and an input shaft 54 rotate integrally such that the output of the engine 1 is transmitted to the input shaft 54 via the torque converter 3. The reverse brake 43 is connected to a reverse brake piston, and is engaged by oil pressure (reverse brake pressure) supplied to a reverse brake piston chamber 43a when the vehicle reverses. When the reverse brake 43 is engaged, the turbine shaft 31 and the input shaft 54 rotate at rotation speeds corresponding to a gear ratio of the planetary gear 41 such that the output of the engine 1 is transmitted to the input shaft 54 via the torque converter 3. In a neutral position (neutral or parking), no oil pressure is supplied, and the forward clutch 42 and reverse brake 43 are both disengaged.

Engagement of the forward clutch 42 and the reverse brake 43 is performed exclusively such that during advancement, the forward clutch 42 is engaged by supplying the forward clutch pressure and the reverse brake 43 is disengaged by connecting the reverse brake pressure to a drain. When reversing, on the other hand, the forward clutch 42 is disengaged by connecting the forward clutch pressure to a drain and the reverse brake 43 is engaged by supplying the reverse brake pressure. Furthermore, in the neutral position, the forward clutch pressure and the reverse brake pressure are connected to drains such that the forward clutch 42 and the reverse brake 43 are both disengaged. It should be noted that in this embodiment, when the forward clutch 42 is engaged, an input rotation speed input into the forward-reverse switching clutch 4 and an output rotation speed output from the forward-reverse switching clutch 4. are identical, or in other words a speed change of the rotation speed is not performed by the forward-reverse switching clutch 4. When the reverse brake 43 is engaged, on the other hand, the input rotation speed input into the forward-reverse switching clutch 4 and the output rotation speed output from the forward-reverse switching clutch 4 are modified in accordance with the gear ratio of the planetary gear 41.

The continuously variable transmission 5 comprises a primary pulley 51, a secondary pulley 52, and a V-belt 53, and performs speed changes by modifying the respective contact radii between the primary pulley 51 and V-belt 53 and between the secondary pulley 52 and V-belt 53 in accordance with the operating conditions of the vehicle. It should be noted that in this embodiment, it is assumed in the following description that the continuously variable transmission 5 is used, but a stepped transmission may be used instead of a continuously variable transmission.

The hydraulic pump 2 is driven by the engine 1 to pump oil. A part of the oil pumped by the hydraulic pump 2 is pressure-regulated and then supplied to the primary pulley 51 and secondary pulley 52, thereby activating the primary pulley 51 and secondary pulley 52 such that a speed change is performed. Another part of the oil pumped by the hydraulic pump 2 is transmitted to the forward clutch piston chamber 42a and the reverse brake piston chamber 43a via a clutch pressure regulating device 14, whereby the engagement state of the forward clutch 42 or the reverse brake 43 is controlled.

A signal of an engine rotation speed (Ne) detected by an engine rotation speed sensor 11, a range signal from an inhibitor switch 70 that detects the position of a shift lever 7, a vehicle speed signal from a vehicle speed sensor 80, an idle switch signal from an idle switch 81, and a signal of a brake pressure (P) (foot brake depression amount) from a brake pressure sensor 82 are input into a control unit 60, whereupon the control unit 60 outputs an oil pressure command signal to the clutch pressure regulating device 14 to control the forward clutch pressure and reverse brake pressure of the forward-reverse switching clutch 4. The control unit 60 also controls the continuously variable transmission 5 by outputting an oil pressure signal and so on for changing the speed of the continuously variable transmission 5.

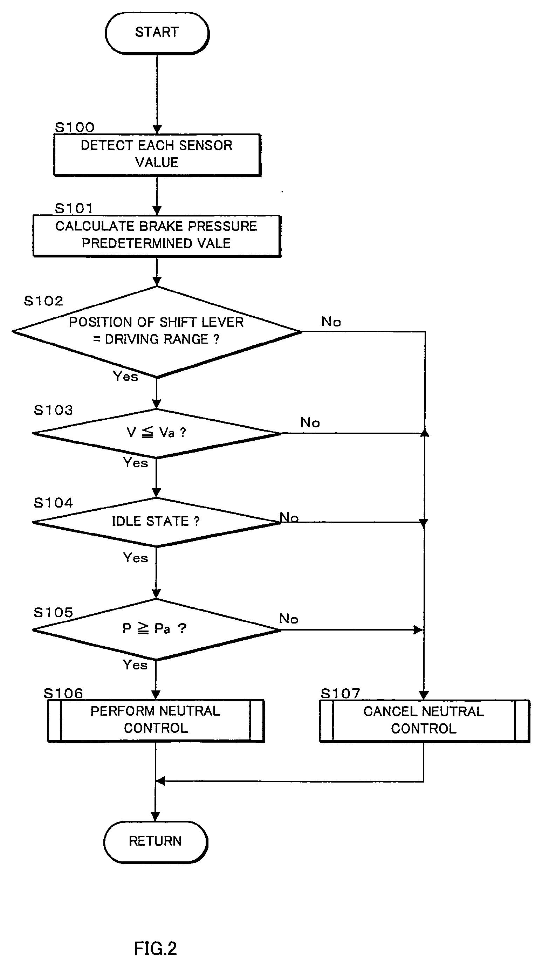

Next, a determination method for determining whether or not to execute neutral control will be described using the flowchart in FIG. 2.

In a step S 100, the engine rotation speed (Ne) is detected by the engine rotation speed sensor 11, the current position of the shift lever 7 is detected by the inhibitor switch 70, the vehicle speed (V) is detected by the vehicle speed sensor 80, and the brake pressure (P) is detected by the brake pressure sensor 82.

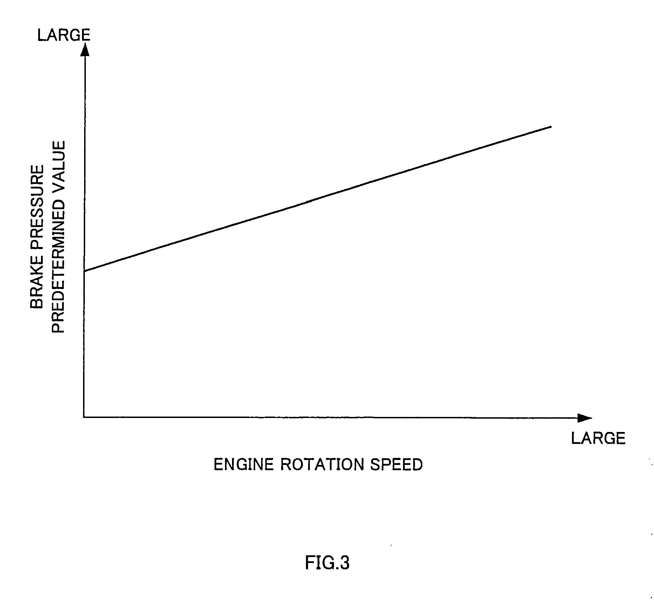

In a step S101, a brake pressure predetermined value (Pa) of the foot brake is calculated from a map shown in FIG. 3 on the basis of the engine rotation speed (Ne) detected by the engine rotation speed sensor 11. FIG. 3 is a map showing a relationship between the engine rotation speed (Ne) and the brake pressure predetermined value (Pa), according to which the brake pressure predetermined value (Pa) increases as the engine rotation speed (Ne) increases. The brake pressure predetermined value (Pa) is a minimum brake pressure for generating the braking force required to bring the vehicle to a standstill against a creep force by depressing the foot brake when the vehicle is stationary. In other words, when the generated brake pressure (P) is equal to or greater than the brake pressure predetermined value (Pa), the vehicle is at a standstill against the creep force.

In a step S 102, a determination is made as to whether or not the position of the shift lever 7, detected by the inhibitor switch 70, is within a driving range. When the shift lever 7 is within the driving range, the routine advances to a step S 103, and when the position of the shift lever 7 is not within the driving range, the routine advances to a step S 107.

In the step S 103, the vehicle speed (V) detected by the vehicle speed sensor 80 is compared to a predetermined vehicle speed (Va). When the vehicle speed (V) is equal to or lower than the predetermined vehicle speed (Va), the routine advances to a step S104, and when the vehicle speed (V) is higher than the predetermined vehicle speed (Va), the routine advances to the step S107. The predetermined vehicle speed (Va) is preferably set at zero, but in this embodiment, the predetermined vehicle speed (Va) is the minimum vehicle speed that can be detected by the vehicle speed sensor 80 such that when the vehicle speed (V) is equal to or lower than the predetermined vehicle speed (Va), the vehicle is determined to be stationary.

In the step S 104, a determination is made as to whether or not the vehicle is in an idle state according to the idle switch 81. In this embodiment, an accelerator pedal operation amount is detected by an accelerator pedal opening sensor, and when the accelerator pedal operation amount is zero, the idle switch 81 switches ON, whereby it is determined that the vehicle is in the idle state. When the accelerator pedal operation amount is not zero, the idle switch 81 switches OFF, whereby it is determined that the vehicle is not in the idle state. When it is determined that the vehicle is in the idle state, the routine advances to a step S 105, and when it is determined that the vehicle is not in the idle state, the routine advances to the step S 107.

It should be noted that when a throttle opening sensor is provided, the idle state may be determined according to a signal from the throttle opening sensor instead of a signal from the accelerator pedal opening sensor. In this case, the idle state is determined when the throttle opening is in an idle-corresponding position.

In the step S 105, the brake pressure (P) detected by the brake pressure sensor 82 is compared to the brake pressure predetermined value (Pa) calculated in the step S101. When the brake pressure (P) is equal to or greater than the brake pressure predetermined value (Pa), the braking force generated by depressing the foot brake is greater than the currently generated creep force, and it is therefore determined that the driver wishes to stop the vehicle. Accordingly, the routine advances to a step S106. When the brake pressure (P) is smaller than the brake pressure predetermined value (Pa), the foot brake depression amount produced by the driver is small, and it is therefore determined that the driver wishes to move the vehicle using the creep force. Accordingly, the routine advances to the step S107.

When the position of the shift lever 7 is in the driving range, the vehicle is stationary, the vehicle is in the idle state, and the brake pressure (P) is equal to or greater than the brake pressure predetermined value (Pa) in the steps S101 to S105, it is determined that neutral control can be executed, and the routine advance to the step S 106. On the other hand, when any one of the above conditions is not met, it is determined that neutral control is not to be executed or that neutral control is to be halted, and the routine advances to the step S 107.

In the step S106, neutral control is performed by discharging the oil pressure of the forward clutch piston chamber 42a and the oil pressure of the reverse brake piston chamber 43a in the forward-reverse switching clutch 4 such that both the forward clutch 42 and the reverse brake 43 are disengaged and torque transmission from the engine 1 to the continuously variable transmission 5 is halted. By performing this neutral control, the drive load of the engine 1 can be reduced, enabling an improvement in fuel economy.

In this embodiment, the brake pressure predetermined value (Pa) required to bring the vehicle to a standstill is calculated on the basis of the engine rotation speed (Ne) in the idle state, which varies according to the temperature of the engine 1 and the use state of auxiliary equipment such as air-conditioning. The calculated brake pressure predetermined value (Pa) is then compared to the actual brake pressure (P), and when the brake pressure (P) is equal to or greater than the brake pressure predetermined value (Pa), neutral control is performed. Hence, the determination as to whether or not neutral control is possible can be performed accurately, and as a result, neutral control can be executed appropriately, enabling an improvement in fuel economy.

In the step S 107, meanwhile, when neutral control is underway as a result of the preceding control, the neutral control is halted and either the forward clutch or the reverse brake is connected. When neutral control is not underway, neutral control is not performed, and the current conditions are maintained.

It should be noted that in this embodiment, when it is determined that neutral control can be executed in the steps S101 to S105, neutral control is begun immediately in the step S 106, but the neutral control may be begun following the elapse of a predetermined time period after determining that neutral control can be executed in the steps S101 to S105. In so doing, the determination as to whether or not neutral control should be performed can be made more accurately.

Furthermore, in this embodiment the depression state of the foot brake is determined by comparing the brake pressure (P) detected by the brake pressure sensor 82 and the brake pressure predetermined value (Pa), but this determination may be made on the basis of a brake pedal operation amount detected by a brake pedal stroke sensor, or a brake pedal depression force detected by a pressure-sensitive sensor that detects the depression force of the brake pedal.

The effects of this embodiment of the invention will now be described.

The engine rotation speed (Ne) varies according to the temperature of the engine 1 and the operational state of the air-conditioning and so on, for example, even when the vehicle is in the idle state, and as a result, the creep force also varies. In this embodiment, when neutral control is to be performed, the brake pressure predetermined value (Pa) required to bring the vehicle to a standstill is calculated on the basis of the engine rotation speed (Ne) while the vehicle is stationary. The brake pressure predetermined value (Pa) is then compared to the brake pressure (P), and when the brake pressure (P) is equal to or greater than the brake pressure predetermined value (Pa), neutral control is performed. Hence, a determination as to whether or not it is possible to perform neutral control appropriately can be made accurately in accordance with the creep force, which varies according to the operating conditions of the vehicle, and as a result, neutral control can be executed appropriately, enabling an improvement in fuel economy.

The brake pressure predetermined value (Pa) for determining whether or not to perform neutral control increases in relation to the creep force, which increases as the engine rotation speed (Ne) increases, and therefore the determination as to whether or not it is possible to perform neutral control appropriately can be made accurately. As a result, neutral control can be executed appropriately, enabling an improvement in fuel economy.

This invention is not limited to the embodiment described above, and it goes without saying that the invention may be subjected to various modifications and improvements within the scope of the technical spirit thereof.

This application claims priority from Japanese Patent Application 2007-158738, filed June 15, 2007, which is incorporated herein by reference in its entirety.

## Claims

1. A control device for controlling an automatic transmission (5). to which a rotation of an engine (1) is transmitted, wherein the device comprises:
means (70) for detecting a position of a shift lever (7) of the automatic transmission (5);
means (82) for detecting a depression amount of a foot brake;
means (11) for detecting an engine rotation speed;
means for calculating a foot brake depression amount predetermined value required to bring a vehicle to a standstill while the vehicle is stationary, on the basis of the engine rotation speed; and
means for disengaging a clutch (4) provided between the engine (1) and the automatic transmission (5) when the position of the shift lever (7) is in a driving range and the foot brake depression amount is equal to or greater than the foot brake depression amount predetermined value while the vehicle is stationary.

2. The control method as defined in Claim 1, wherein the foot brake depression amount predetermined value increases as the engine rotation speed increases.

3. A control method for controlling an automatic transmission (5) to which a rotation of an engine (1) is transmitted, wherein the method comprises:
calculating a foot brake depression amount predetermined value required to bring a vehicle to a standstill while the vehicle is stationary, on the basis of the engine rotation speed; and
disengaging a clutch (4) provided between the engine (1) and the automatic transmission (5) when the position of the shift lever (7) is in a driving range and the foot brake depression amount is equal to or greater than the foot brake depression amount predetermined value while the vehicle is stationary.

4. The control method as defined in Claim 3, wherein the foot brake depression amount predetermined value increases as the engine rotation speed increases.
